Europäisches Patentamt

European Patent Office

Office européen des brevets

(19)

(11) Veröffentlichungsnummer: **0 210 369**
**B1**

(12) **EUROPÄISCHE PATENTSCHRIFT**

(45) Veröffentlichungstag der Patentschrift: 24.10.90

(51) Int. Cl.⁵: **G 01 B 7/00**

(21) Anmeldenummer: **86107078.7**

(22) Anmeldetag: **24.05.86**

(54) **Taststift-Schnellwechselhalterung.**

(30) Priorität: **22.07.85 DE 3526108**

(43) Veröffentlichungstag der Anmeldung:
**04.02.87 Patentblatt 87/06**

(45) Bekanntmachung des Hinweises auf die
Patenterteilung:
**24.10.90 Patentblatt 90/43**

(84) Benannte Vertragsstaaten:
**CH DE FR GB IT LI SE**

(56) Entgegenhaltungen:
**EP-A-0 128 464**
**EP-A-0 142 373**
**GB-A-2 047 133**
**GB-A-2 118 075**
**US-A-3 270 605**

**Feinmechanische Bauelemente, S. Hildebrandt,**
**C. Hanser Verlag, S. 750-767**
**Feinwerkelemente, H. Ringhandt, C. Hanser**
**Verlag, S. 280-285**

(73) Patentinhaber: **Wild Leitz GmbH**
**Ernst-Leitz-Strasse 30 Postfach 20 20**
**D-6330 Wetzlar 1 (DE)**

(72) Erfinder: **Ferber, Wolfgang**
**Austrasse 2**
**D-6335 Lahnau 1 (DE)**
Erfinder: **Schuster, Erich**
**Friedrichstrasse 10**
**D-6338 Hüttenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Aufnahmevorrichtung am Tastkopf einer Koordinatenmeßmaschine zur Schnellwechslung eines wenigstens einen Taststift aufnehmenden Taststiftträgers, der gegen ein seine Lage im Tastkopf eindeutig bestimmendes Lager gezogen wird.

Derartige Aufnahme vorrichtungen sind entsprechend der jeweiligen Meßaufgaben für ein rasches und unkompliziertes Ansetzen der Taster bzw. der Tasterkombinationen an den Tastkopf erforderlich und sind besonders bei der automatischen Messung unterschiedlicher Teile sinnvoll.

Dazu ist aus der DE—A—33 20 127 eine Aufnahme vorrichtung zur auswechselbaren Befestigung eines Taststiftes bzw. einer Taststiffkombination am Tastkopf eines Koordinatenmeßgerätes bekannt, bei dem eine elektrisch arbeitende Spanneinrichtung den Anschlußkörper des Taststiftes bzw. der Taststiftkombination gegen ein seine Lage eindeutig bestimmendes Lager in der Aufnahme am Tastkopf zieht.

Nachteil dieser Einrichtung ist, daß durch magnetische Spannmittel nur begrenzte Klemmkräfte aufgebracht werden können, so daß bei Kollision die Taststiftkombinationen aus der Wechseleinrichtung herausfallen können, und daß beim Schalten der Elektromagnete bzw. -motoren Wärme erzeugt wird, die sich bei häufigem Taststiftwechsel sowohl unvorteilhaft auf die Rastgenauigkeit der Taststifte als auch auf die Meßgenauigkeit auswirken.

Eine aus GB—A—2 047 133 bekannte gattungsgemäße Aufnahmevorrichtung ist als eine Art Bajonettverschluß konstruiert. Dabei ist eine Drehbewegung zum Befestigen und Lösen nötig. Für einen automatischen Tasterwechsel erfordert das einen zusätzlichen Drehantrieb.

Der in der US—A—3 270 605 beschriebene Wechselmechanismus für den Werkzeugträger einer Ausstanzmaschine weist zwei Handhebel auf, die über Exzenterscheiben und Haken auf Stifte des Werkzeugs wirken. Es ist nicht erkennbar, wie die für Koordinatenmeßmaschinen erforderliche Präzision erreicht werden kann.

Der Erfindung liegt daher die Aufgabe zugrunde, eine Aufnahme am Tastkopf einer Koordinatenmeßmaschine zu schaffen, bei welcher bei einfachem Aufbau ein wenigstens einen Taststift aufnehmender Taststiftträger ohne die genannten Nachteile schnell auswechselbar ist und die auch eine automatische Schnellwechslung gestattet.

Für eine Aufnahme der eingangs genannten Art wird diese Aufgabe durch die Kennzeichnenden Mekmale des Anspruchs 1 gelöst.

Vorteilhafte Ausgestaltungen der erfindungsgemäßen Aufnahme sind Gegenstand der abhängigen Ansprüche.

In der Zeichnung ist die Erfindung in einem Ausführungsbeispiel schematisch dargestellt und im Nachfolgenden näher beschrieben. Es zeigen:

Fig. 1 einen Taststiftträger;

Fig. 2 die erfindungsgemäße Aufnahme, die an einen nicht mit dargestellten Tastkopf einer Koordinatenmeßmaschine angebaut ist, in geschnittener Seitenansicht,

Fig. 3 eine bekanntes 3-Punkt-Lager für den Taststiftträger und,

Fig. 4 den Taststiftträger gem, Fig. 1 in einer Teilseitenansicht.

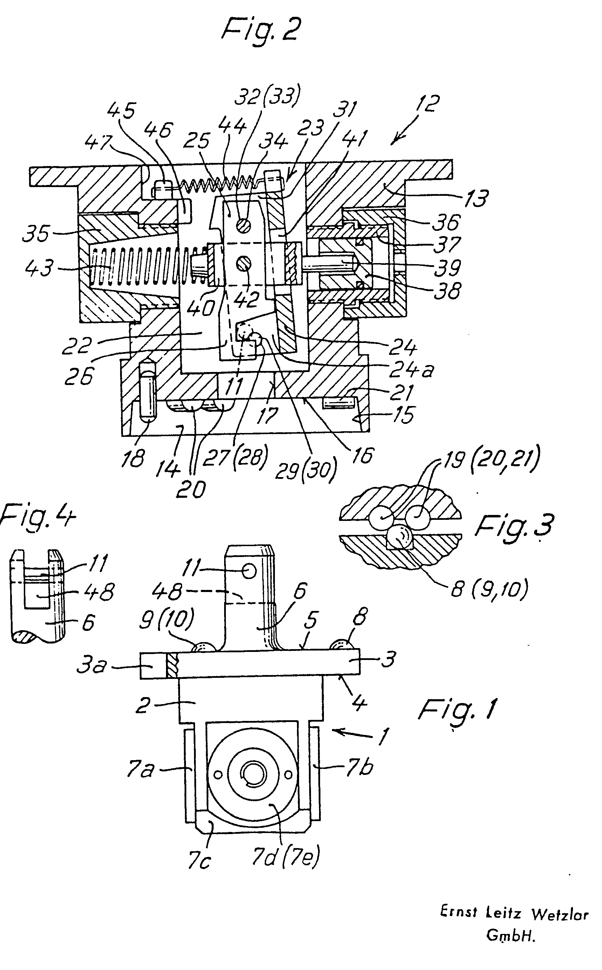

Die schematische Darstellung in Fig. 1 zeigt einen einstückigen Taststiftträger 1, der sich in ein Unterteil 2, einen Flansch 3 mit parallelen Flächen 4, 5 und Zylinder 6 gliedert. Im Unterteil 2 sind zur Aufnahme von hier nicht mitdargestellten Taststiften bzw. Taststiftkombinationen Gewinde- oder Steckklemmbuchsen 7a-7e angeordnet.

In der dem Zylinder 6 zugekehrten Fläche 5 des Flansches 3 sind im gleichen Abstand von der Achse des Taststiftträgers 1 um 120° zueinander versetzte Kugeln 8, 9 und 10 eingelassen. Außerdem ist der Flansch 3 an seinem äußeren Umfang mit einer Nut 3a versehen, die allerdings durch eine Bohrung ersetzt werden kann. Die Funktion der Kugeln 8—10 sowie der Nut 3a bzw. der Bohrung werden weiter unten beschrieben werden.

Am freien Ende des Zylinders 6 ist parallel zu seiner Achse ein Schlitz 48 vorgesehen (Fig. 4). Senkrecht dazu ist ein Zylinderstift 11 montiert, dessen Funktion ebenfalls weiter unten beschrieben werden wird.

In der Darstellung der Fig. 2 ist schematisch eine Taststiftwechselvorrichtung gezeigt, die an einem nicht mitdargestellten Tastkopf eines Koordinatengerätes angesetzt ist. Ins untere Teil des Gehäuses 13 ist eine flache Ausnehmung 14 mit leicht konischen Innenflächen 15 und planer Grundfläche 16 sowie eine Bohrung 17 eingebracht. In die Grundfläche 16 ist parallel zur Symmetrieachse des Gehäuses 13 ein Orientieruntsstift 18 eingelassen.

Außerdem sind auf der Grundfläche 16 120° zueinander versetzte Walzenpaare 19—21 (Fig. 3) angeordnet, deren Funktion weiter unten beschrieben wird.

Ins obere Teil de Gehäuses 13 ist eine tiefe Ausnehmung 22 eingebracht. Zwischen dieser und der flachen Ausnehmung 14 entsteht ein Boden, der von der Bohrung 17 durchstoßen wird.

Die tiefe Ausnehmung 22 nimmt ein Kipphebelspannwerk 23 auf, welches aus einem U-förmig ausgebildeten Hebel 24 sowie einem flachen, mit einem Kupplungsteil 26 versehenen Hebel 25 besteht. Die Seitenwände des U-förmigen Hebels 24 sind am unteren Ende 24a mit je einer Lagerbohrung 27, 28 versehen, in welche im Gehäuse 13 befestigte Achsstifte 29, 30 fassen, um die der U-förmige Hebel 24 schwenkbar lagert.

Am oberen Ende 31 ist in den Seitenwänden de U-förmigen Hebels je eine weitere Lagerbohrung 32, 33 eingebracht. Diese nehmen eine Achse 34 auf, welche den um sie schwenkbaren, flachen Hebel 24 tragt.

Im mittleren Bereich des Gehäuses 13 ist links ein Federgehäuse 35 und rechts, zur Achse des Federgehäuses 35 fluchtend, ein Zylindertopf 36 zur Aufnahme eines Hydraulik- oder Pneumatikzylinders 37 mit Kolben 38 befestigt.

Im Kolben 36 führt sich mit Seitenspiel ein Schubstab 39 eines Schiebers 40, der durch eine Öffnung 41 in der Rückwand des U-förmigen Hebels 24 hindurchtretend den flachen Hebel 25 umfaßt. Durch einen Verbindungsstift 42 ist der flache Hebel 25 formschlüssig aber gelenkig mit dem Schieber 40 verbunden.

Das über den flachen Hebel 25 hinausragende Ende des Schiebers 40 deint als Abstützung für eine Druckfeder 43, die im Federgehäuse 35 lagert.

Am U-förmigen Hebel 24 ist mit einem Ende eine Zugfeder 44 befestigt, die mit dem anderen Ende an einem Haltebolzen 45 eingehängt ist, der zusammen mit einem Anschlag 46 in einer exzentrischen Erweiterung 47 der tiefen Ausnehmung 22 im Gehäuse 13 montiert ist.

Die bis hier beschriebene Aufnahme kann also die erforderliche Klemmkraft zur Halterung des Taststiftträgers 1 durch Federkraft oder durch Druckluft aufbringen. Im vorliegenden Fall dient die Druckfeder 43 zum Klemmen. Bei Ausfall der Druckluft bleibt die Klemmkraft, die durch die Druckfeder 43 erzeugt wird, erhalten.

Zum Einsetzen des Taststiftträgers 1 wird dem Druckzylinder 37 Druckluft zugeführt. Dadurch scheibt der Kolben 38 nach links und überträgt über den Schubstab 39 und den Schieber 40 die Bewegung auf das Kipphebelspannwerk 23. Diese kippt um die Achsstifte 29, 30 schwenkend zunächst so lange nach links, bis eine Anschlagfläche des U-förmigen Hebels 24 gegen den Anschlag 46 schlägt. Dann wird bei weiterer Druckgabe der flache Hebel 25 gegen die Kraft der Druckfeder 43 um die Achse 34 verschwenkt, bis er an der Gehäusewandung zur Anlage kommt. Der Taststiftträger 1 kann nun in die Wechselvorrichutng eingeführt werden.

Bei diesem Einsetzen wird der Taststiftträger 1 durch die leicht konischen Innenflächen 15 der flachen Ausnehmung 14 im unteren Teil das Gehäuses 13 sowie den in der Grundfläche 16 eingelassenen Orientierungsstift 18 und die Nut oder Bohrung 3a im Flansch 3 des Taststiftträgers 1 grob vororientiert.

Bei Lösen des pneumatisch oder hydraulisch erzeugten Drucks bleibt der Hebel 24 zunächst unter Einwirkung der Zugfeder 44 in seiner Lage, während der Hebel 25 um die Achse 32, 33 schwenkt und mit dem hakenförmig ausgebildeten Kupplungsteil an dem Stift 11 des Taststiftträgers 1 eingreift. Anschließend schwenkt das Kipphebelspannwerk um die Achse 29, 30 und arretiert den Taststiftträger in dem 3-Punkt-Lager. Die formschlüssige Kupplung zwischen Taststiftträger und Tastkopf verhindert dabei ein Lösen des Trägers aus dem Tastkopf, wenn bei Kollision eine Überbeanspruchung des Trägers auftritt.

Zum Wechseln des Taststiftträgers wird wie zum "Öffnen" verfahren. Der Träger kann dann herausgenommen und auf einer entsprechenden Ablage abgelegt werden.

## Patentansprüche

1. Aufnahmevorrichtung am Tastkopf einer Koordinatenmeßmaschine zur Schnellwechslung eines wenigstens einen Taststift aufnehmenden Taststiftträgers (1), der gegen ein seine Lage im Tastkopf eindeutig bestiemmendes Lager gezogen wird, dadurch gekennzeichnet, daß zur Aufnahme des Taststiftträgers (1) im Gehäuse (13) ein mechanisches, auf das Lagerteil (8, 6, 11) des Taststiftträgers (1) wirkendes Spannwerk (23) sowie dieses betätigende, Druck oder Zug erzeugende Mittel (37—40, 43, 44) vorgesehen sind, und daß das Spannwerk als Kipphebelspannwerk (23) ausgebildet ist, dessen erstes Glied (24) mit seinem unteren Ende um eine erste Achse (29, 30) schwenkbar im Gehäuse (13) gelagert ist, und daß am oberen Ende (31) dieses ersten Glieds (24) ein zweites, um eine zweite parallel zur ersten Achse (29, 30) verlaufende Achse (34) bewegbares Glied (25) vorgesehen ist.

2. Aufnahmevorrichtung nach Anspruch 1, dadurch gekennzeichnet, daß das zweite Glied (25) an seinem freien Ende mit einer das Lagerteil (8, 6, 11) des Taststiftträgers (1) erfassenden Kupplungsvorrichtung (26) vorgesehen ist.

3. Aufnahmevorrichtung nach Anspruch 2, dadurch gekennzeichnet, daß die Kupplungsvorrichtung (26) eine einseitig offene Nut mit parallelen Kanten auffweist.

4. Aufnahmevorrichtung nach Anspruch 2, dadurch gekennzeichnet, daß die Kupplungsvorrichtung (26) eine einseitig offene Nut mit konisch zulaufenden Kanten aufweist.

5. Aufnahmevorrichtung nach Anspruch 1, dadurch gekennzeichnet, daß als Druck oder Zug erzeugende Mittel im Gehäuse (13) angeordnete Federspeicher (43, 44) vorhanden sind.

6. Aufnahmevorrichtung nach Anspruch 1, dadurch gekennzeichnet, daß als Druck oder Zug erzeugende Mittel im Gehäuse (13) angeordnete, hydraulisch gesteuerte Einrichtungen (37—40) vorgesehen sind.

7. Aufnahmevorrichtung nach Anspruch 1, dadurch gekennzeichnet, daß als Druck oder Zug erzeugende Mittel im Gehäuse (13) angeordnete, pneumatisch gesteuerte Einrichtungen (37—40) vorhanden sind.

8. Aufnahmevorrichtung nach Anspruch 1, dadurch gekennzeichnet, daß als Druck oder Zug erzeugende Mittel Kombinationen aus in den Ansprüchen 5 bis 7 genannten Einrichtungen (37—40, 43, 44) angeordnet sind.

9. Aufnahmevorrichtung nach mindestens einem der Ansprüche 1 bis 8, dadurch gekennzeichnet, daß die Druck oder Zug erzeugenden Mittel (37—40, 43, 44) zwecks Verkippung des Kipphebelspannwerks (23) bewegbar getrieblich mit dem zweiten Glied (25) verbunden sind.

10. Aufnahmevorrichtung nach mindestens einem der Ansprüche 1 bis 9, dadurch gekennzeichnet, daß der Taststiftträger (1) mit einer Nut oder Bohrung (34) versehen ist, in die ein in der Aufnahme (14) am Gehäuse (15) angebrachtes Orientierungsmittel (18) eingreift.

## Revendications

1. Dispositif de réception, sur la sonde d'une machine de mesure de coordonnées, pour le changement rapide d'un support de palpeur (1) recevant au moins un palpeur qui est attiré contre un appui déterminant sa position dans la sonde de manière univoque, caractérisé en ce que, pour la réception du support de palpeur (1), sont prévus, dans le boîtier (13), un mécanisme tendeur mécanique (23) agissant sur la partie d'appui (8, 6, 11) du support de palpeur ainsi qu'un moyen l'actionnant, produisant de la pression ou de la traction (37—40, 43, 44) et en ce que le mécanisme tendeur a la configuration d'un mécanisme tendeur à levier basculant (23) dont le premier organe (24) est logé pivotant dans le boîtier (13) par sa première extrémité, autour d'un premier axe (29, 30) et et ce qu'à l'extrémité supérieure (31) de ce premier organe (24) est prévu un second organe (25) mobile autour d'un second axe (34) parallèle au premier axe (29, 30).

2. Dispositif de réception selon la revendication 1, caractérisé en ce que le second organe (25) est pourvu, à son extrémité libre, d'un dispositif d'accouplement (26) saisissant la partie d'appui (8, 6, 11) du support de palpeur (1).

3. Dispositif de réception selon la revendication 2, caractérisé en ce que le dispositif d'accouplement (26) présente une rainure ouverte d'un côté avec bords parallèles.

4. Dispositif de réception selon la revenidcation 2, caractérisé en ce que ladite dispositif d'accouplement (26) présente une rainure ouverte d'un côté, avec bords convergents coniques.

5. Dispositif de réception selon la revendication 1, caractérisé en ce que comme moyens produisant de la pression ou de la traction, sont prévus des ressorts accumulateurs (43, 44) agencés dans le boîtier 13.

6. Dispositif de réception selon la revendication 1, caractérisé en ce qu'en tant que moyens produisant de la pression ou de la traction sont prévus des systèmes (37—40) à commande hydraulique agencés dans le boîtier 13.

7. Dispositif de réception selon la revendication 1, caractérisé en ce qu'en tant que moyens produisant de la pression ou de la traction sont prévus des systèmes (37—40) à commande pneumatique agencés dans le boîtier (13).

8. Dispositif de réception selon la revendication 1, caractérisé en ce qu'en tant que moyens produisant de la pression ou de la traction, des combinaisons des systèmes indiqués aux revendications 5 à 7 (37—40; 43, 44) sont prévues.

9. Dispositif de réception selon l'une quelconque des revendications 1 à 8, caractérisé en ce que les moyens produisant la pression ou la traction (37—40; 43, 44) sont reliés au second organe (25) de manière mobile en vue du basculement du mécanisme tendeur à levier basculant (23).

10. Dispositif de réception selon l'une quelconque des revenidcations 1 à 9, caractérisé en ce que le support de palpeur (1) est pourvu d'une rainure ou d'un perçage (3a) où s'insère un moyen d'orientation (18) prévu dans le logement (14) sur le boîtier (13).

## Claims

1. Receptacle device at the feeler head of a coordinate measuring machine for quick exchange of a feeler pin carrier (1), which receives at least one feeler pin and is drawn against a bearing which unambigously determines its position in the feeler head, characterised thereby, that a mechanical tightening mechanism (23), which acts on the bearing part (8, 6, 11) of the feeler pin carrier (1), as well as means (37 to 40, 43, 44) generating pressure or tension and actuating this tightening mechanism (23) are provided for the reception of the feeler pin carrier (1) in the housing (13) and that the tightening mechanism is constructed as tilting lever tightening mechanism (23), the first member (24) of which is borne by its lower end in the housing (13) to be tiltable about a first axle (29, 30) and that a second member (25), which is movable about a second axle (34) extending parallelly to the first axle (29, 30) is provided at the upper end (31) of this first member (24).

2. Receptacle device according to claim 1, characterised thereby, that the second member (25) is provided at its free end with a coupling device (26) seizing the bearing part (8, 6, 11) of the feeler pin carrier (1).

3. Receptacle device according to claim 2, characterised thereby, that the coupling device (26) displays a groove which is open at one side and has parallel edges.

4. Receptacle device according to claim 2, characterised thereby, that the coupling device (26) displays a groove which is open at one side and has edges which are converging conically.

5. Receptacle device according to claim 1, characterised thereby, that spring stores (43, 44), which are arranged in the housing (13), are present as means generating pressure or tension.

6. Receptacle device according to claim 1, characterised thereby, that hydraulically controlled equipments (37 to 40), which are arranged in the housing (13), are provided as means generating pressure or tension.

7. Receptacle device according to claim 1, characterised thereby, that pneumatically controlled equipments (37 to 40), which are arranged in the housing (13), are present as means generating pressure or tension.

8. Receptacle device according to claim 1, characterised thereby, that combinations of equipments (37 to 40, 43, 44) named in the claims 5 to 7 are arranged as means generating pressure or tension.

9. Receptacle device according to at least one of the claims 1 to 8, characterised thereby, that the means (37 to 40; 43, 44) generating pressure or tension are in geared connection with the second member (25) for the purpose of tilting the tilting lever tightening mechanism (23).

10. Receptacle device according to at least one of the claims 1 to 9, characterised thereby, that the feeler pin carrier (1) is provided with a groove or bore (3a), into which an orienting means (18) engages, which is mounted in the receptacle (14) at the housing (13).

EP 0 210 369 B1

*Fig. 2*

*Fig. 4*

*Fig. 3*

*Fig. 1*

Ernst Leitz Wetzlar
GmbH.

1